# EUROPEAN PATENT APPLICATION

(11) **EP 3 313 154 A1**
(43) Date of publication of application: **25.04.2018**
(21) Application number: 17151602.4
(22) Date of filing: 16.01.2017
(51) Int. Cl.: H05B 37/02

(54) **RF CONTROLLED SWITCH BOX WITHOUT USING NEUTRAL WIRE AND AN RF CONTROLLED CIRCUIT THEREOF**

(30) Priority: 18.10.2016 TW 105133602
(71) Applicant: Climax Technology Co., Ltd., Taipei 114 (TW)
(72) Inventor: LEE, Pin-Chia, Taipei 114 (TW); LIU, Lung-Shu, Taipei 114 (TW)
(74) Representative: Karakatsanis, Georgios

(57) **Abstract**

A radio-frequency (RF) controlled switch box without using Neutral wire includes a relay, and an RF controlled circuit that receives an RF control signal to control open or closed state of the relay. The RF controlled circuit, the relay and a light-emitting diode (LED) light bulb are connected in series between Line wire and the Neutral wire. The RF controlled circuit includes a voltage clamper. When the relay is closed, mains voltage between the Line wire and the Neutral wire is distributed between the voltage clamper and the LED light bulb, such that the voltage clamper generates a clamped voltage and the LED light bulb turns on. When the relay is open, the RF controlled circuit takes power from a rechargeable battery.

## Description

### BACKGROUND OF THE INVENTION

### 1. FIELD OF THE INVENTION

The present invention generally relates to an RF controlled switch box, and more particularly to an RF controlled switch box without using Neutral wire adaptable to turning on or off an LED light bulb.

### 2. DESCRIPTION OF RELATED ART

Wireless network has been commonly used for control of home automation due to low power consumption and low cost. A wireless power switch is ordinarily adopted in a wireless automation control system. Both terminals of the wireless power switch are normally connected to Line wire and Neutral wire of mains voltage, respectively. Alternating-current (AC) power supply is converted to direct-current (DC) power supply, which is then provided to a wireless controlled module of the wireless automation control system.

Switch boxes in some places, however, comprise the Line wire and a switch wire, but not the Neutral wire. A conventional wireless automation control system therefore needs to pull the Neutral wire additionally for a power device. The power device provides power for the wireless controlled module, which controls the power switch wirelessly. Nevertheless, the conventional wireless automation control system is implemented with increasing complexity and cost for lack of the Neutral wire in the switch box. In an alternative wireless automation control system, a battery is used instead as power supply, but causes inconvenience during battery replacement.

LED light bulbs have been replacing incandescent lamps for the reasons that the LED light bulbs have electrical efficiency substantially greater than the incandescent lamps. As the LED light bulbs have impedance greater than the incandescent lamps, the wireless automation control system without Neutral wire specifically designed for the incandescent lamps cannot be adapted to turn on or off the LED light bulbs.

For the foregoing reasons, a need has arisen to propose a novel wireless automation control system without Neutral wire for turning on or off the LED light bulbs.

### SUMMARY OF THE INVENTION

In view of the foregoing, it is an object of the embodiment of the present invention to provide an RF controlled switch box without using Neutral wire to turn on or off an LED light bulb. The embodiment takes a portion of mains voltage when a relay is closed in order to generate a required power supply and to charge a rechargeable battery without affecting the turn on of the LED light bulb.

According to one embodiment, an RF controlled switch box without using Neutral wire includes a relay and an RF controlled circuit. The RF controlled circuit receives an RF control signal to control open or closed state of the relay, wherein the RF controlled circuit, the relay and an LED light bulb are connected in series between Line wire and the Neutral wire. The RF controlled circuit includes a voltage clamper. The mains voltage between the Line wire and the Neutral wire is distributed between the voltage clamper and the LED light bulb when the relay is closed, such that the voltage clamper generates a clamped voltage and the LED light bulb turns on; and the RF controlled circuit takes power from a rechargeable battery when the relay is open.

### BRIEF DESCRIPTION OF THE DRAWINGS

FIG. 1 shows a system block diagram illustrating an RF controlled switch box without using Neutral wire according to one embodiment of the present invention;
FIG. 2 shows a detailed block diagram of the RF controlled circuit of FIG. 1;
FIG. 3 shows an exemplary waveform of the clamped voltage of the voltage clamper of FIG. 2; and
FIG. 4 shows a detailed circuit diagram of the charging circuit of FIG. 2.

### DETAILED DESCRIPTION OF THE INVENTION

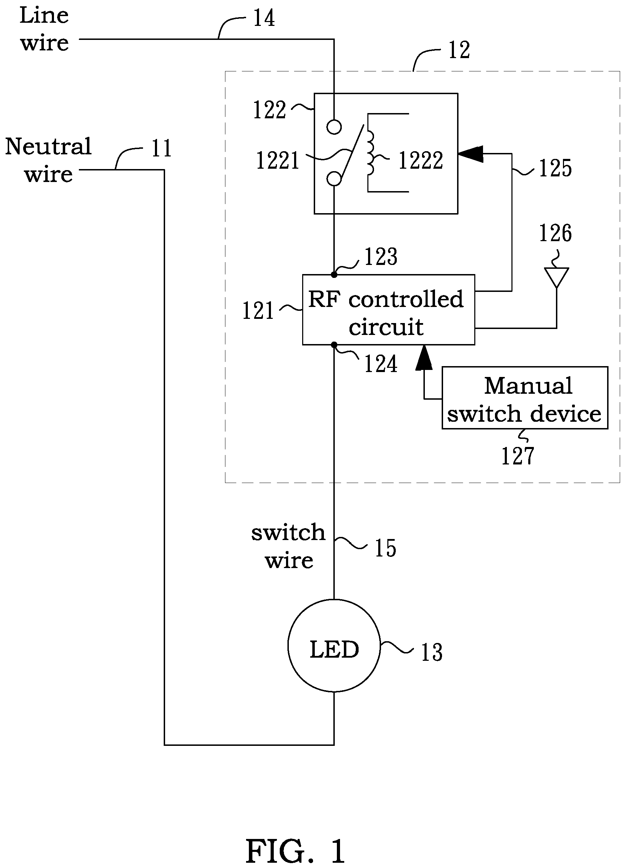

FIG. 1 shows a system block diagram illustrating a radio frequency (RF) controlled switch box 12 without using Neutral wire adaptable to turning on or off a light-emitting diode (LED) light bulb 13 according to one embodiment of the present invention. The RF controlled switch box (switch box hereinafter) 12 of the embodiment may, but not necessarily, be a wall switch box. As shown in FIG. 1, the switch box 12 and the LED light bulb 13 are connected in series between Line wire 14 and the Neutral wire 11 of mains power. According to one aspect of the embodiment, the switch box 12 is not connected to the Neutral wire 11. In the embodiment, one end of the switch box 12 is connected to the Line wire 14, and the other end of the switch box 12 is connected to a switch wire 15. According to regulations, the LED light bulb 13 is connected between the switch wire 15 and the Neutral wire 11.

In the embodiment, the switch box 12 may include an RF controlled circuit 121 and a relay 122, which are connected in series between the Line wire 14 and the switch wire 15. It is noted that the RF controlled circuit 121 and the relay 122 need not be arranged in the order as exemplified in FIG. 1. Specifically, a first end 123 of the RF controlled circuit 121 is connected to a switch 1221 of the relay 122, and a second end 124 of the RF controlled circuit 121 is connected to the LED light bulb 13. The RF controlled circuit 121 controls a coil of wire 1222 of the relay 122 via a control line 125 in order to control open or closed state of (the switch 1221 of) the relay 122. According to another aspect of the embodiment, the RF controlled circuit 121 receives RF wave via an antenna 126 to facilitate remote and wireless control of open or closed state of the relay 122. When the relay 122 is open, the LED light bulb 13 turns off; and when the relay 122 is closed, the LED light bulb 13 turns on. In the embodiment, although the RF controlled circuit 121 and the LED light bulb 13 are connected in series, the RF controlled circuit 121 would not affect the turn on of the LED light bulb 13 as will be readily understood from the following descriptions.

The switch box 12 of the embodiment may optionally include a manual switch device 127, which generates a manual switch signal for the RF controlled circuit 121 in a manual manner, instead of RF wireless manner. The manual switch signal is then transmitted via the control line 125 for controlling the coil of wire 1222 of the relay 122, thereby controlling open or closed state of (the switch 1221 of) the relay 122. The manual switch device 127 facilitates the direct control by users, and provides the same function as provided by the RF controlled circuit 121. It is noted that the manual switch device 127 is an optional, but not necessary, component in the embodiment.

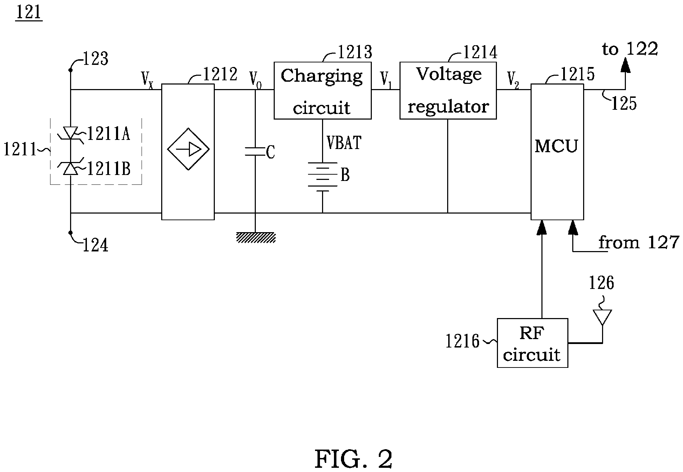

FIG. 2 shows a detailed block diagram of the RF controlled circuit 121 of FIG. 1. In the embodiment, the RF controlled circuit 121 may include a voltage clamper 1211, which is connected between the first end 123 and the second end 124, for generating a clamped voltage Vx. When the relay 122 is closed, the mains voltage between the Line wire 14 and the Neutral wire 11 is distributed between the voltage clamper 1211 and the LED light bulb 13 according to voltage division principle. As the LED light bulb 13 usually has higher impedance, the LED light bulb 13 takes more voltage than the voltage clamper 1211. Therefore, the voltage clamper 1211 would not affect the turn on of the LED light bulb 13. Moreover, as the LED light bulb 13 usually possesses voltage regulation scheme, the voltage clamper 1211 would not affect the turn on of the LED light bulb 13. To the contrary, if the LED light bulb 13 is replaced with an incandescent lamp, the incandescent lamp takes less voltage than the voltage clamper 1211 according to voltage division principle, because the incandescent lamp usually has lower impedance. Therefore, the incandescent lamp could not turn on.

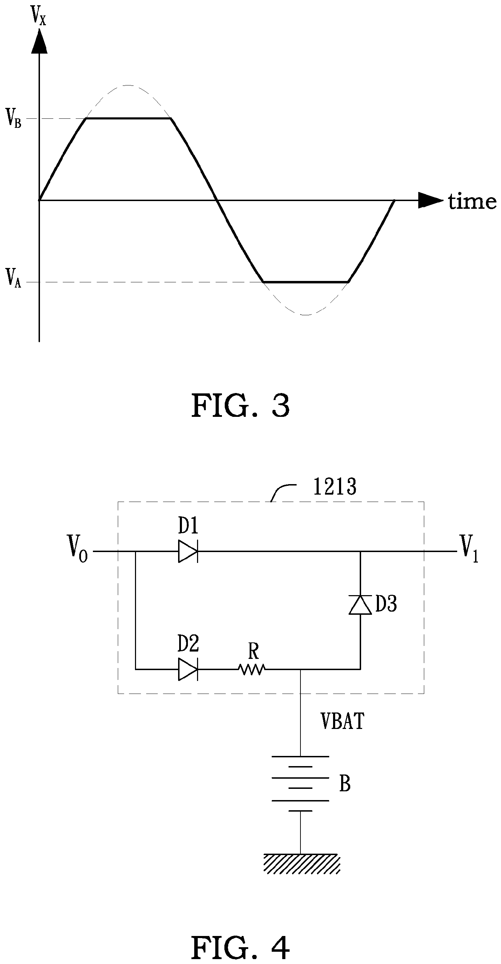

In the embodiment, the voltage clamper 1211 may include a first Zener diode 1211A and a second Zener diode 1211B, which are connected in series but in opposite directions, for example, by connecting the cathode of the first Zener diode 1211A to the cathode of the second Zener diode 1211B. The voltage clamper 1211 limits the amplitude of the clamped voltage Vx to the Zener voltage such as 12 volts. FIG. 3 shows an exemplary waveform of the clamped voltage Vx of the voltage clamper 1211 of FIG. 2, where V_{A} represents the Zener voltage of the first Zener diode 1211A, and V_{B} represents the Zener voltage of the second Zener diode 1211B.

For example, the LED light bulb 13 normally operates at 85-230 volts, and mains voltage is either 120 volts or 230 volts. In the worst-case scenario, the voltage drop across the LED light bulb 13 is 85 volts, mains voltage is 120 volts, and the tolerance voltage across the switch box 12 is thus 35 (=120-85) volts. If the Zener voltage is 12 volts, the clamped voltage Vx between the first end 123 and the second end 124 thus can be compatible with the tolerance voltage mentioned above.

The RF controlled circuit 121 of the embodiment may include a rectifier, such as a bridge rectifier 1212, which receives the clamped voltage Vx between the first end 123 and the second end 124, and then converts the alternating-current (AC) clamped voltage Vx to a direct-current (DC) rectified voltage V₀. The RF controlled circuit 121 of the embodiment may also include a smoothing capacitor C that reduces the ripple of the rectified voltage V₀ such that the rectified voltage V_{O} may be substantially equal to the Zener voltage.

According to a further aspect of the embodiment, the RF controlled circuit 121 of the embodiment may include a charging circuit 1213, which receives the rectified voltage V₀ when the relay 122 is closed, and then charges a rechargeable battery B to generate a charging voltage VBAT. The charging circuit 1213 compares the rectified voltage V₀ and the charging voltage VBAT, larger one of which is selected as a power supply voltage V₁. When the relay 122 is open, as no voltage drop exists between the first end 123 and the second end 124, the rectified voltage V₀ approaches zero. At this moment, the charging circuit 1213 selects the charging voltage VBAT as the power supply voltage V₁. When the relay 122 is closed, as a voltage drop exists between the first end 123 and the second end 124, the rectified voltage V₀ is generated. At this moment, the charging circuit 1213 selects the larger one of the rectified voltage V₀ and the charging voltage VBAT as the power supply voltage V₁, and charges the rechargeable battery B at the same time.

FIG. 4 shows a detailed circuit diagram of the charging circuit 1213 of FIG. 2. In the embodiment, the charging circuit 1213 may include a first diode D1, forward connected between an input end (i.e., the rectified voltage V₀) of the charging circuit 1213 and an output end (i.e., the power supply voltage V₁) of the charging circuit 1213. The charging circuit 1213 may also include a second diode D2, forward connected between the input end of the charging circuit 1213 and the positive terminal of the rechargeable battery B. A current limiting resistor R may be connected in series with the second diode D2. The charging circuit 1213 may further include a third diode D3, forward connected between the positive terminal of the rechargeable battery B and the output end of the charging circuit 1213.

Regarding the circuit shown in FIG. 4, when the rectified voltage V₀ is greater than the charging voltage VBAT, the rectified voltage V₀ charges the rechargeable battery B via the second diode D2, and the rectified voltage V₀ acts as the power supply voltage V₁ via the first diode D₁. The power supply voltage V₁ is substantially equal to the rectified voltage V₀, if the voltage drop across the first diode D1 is neglected. When the rectified voltage V₀ is less than the charging voltage VBAT, the charging voltage VBAT acts as the power supply voltage V₁ via the third diode D3. The power supply voltage V₁ is substantially equal to the charging voltage VBAT, if the voltage drop across the third diode D3 is neglected.

The RF controlled circuit 121 may further include a voltage regulator 1214, which receives the power supply voltage V₁ and then accordingly generates a regulated voltage V₂. The regulated voltage V₂, for example 3.3 volts, is normally less than the power supply voltage V₁.

The RF controlled circuit 121 may include a microcontroller unit (MCU) 1215, which receives the regulated voltage V₂ as a power supply. If the charging circuit 1213 can output a proper and stable power supply voltage V₁ to the MCU 1215, the voltage regulator 1214 may be omitted and the power supply voltage V₁ is used instead as the power supply to the MCU 1215. The MCU 1215 of the embodiment may perform multiple functions. For example, the MCU 1215 may receive an RF control signal, which is generated by an RF circuit 1216 that processes RF wave received from an antenna 126. The MCU 1215 uses the RF control signal, which is transmitted via the control line 125, to control the coil of wire 1222 of the relay 122, thereby controlling open or closed state of (the switch 1221 of) the relay 122. Accordingly, the MCU 1215 can remotely and wirelessly control open or closed state of the relay 122. The MCU 1215 may optionally receive a manual switch signal from the manual switch device 127 to manually control open or closed state of (the switch 1221 of) the relay 122.

Although specific embodiments have been illustrated and described, it will be appreciated by those skilled in the art that various modifications may be made without departing from the scope of the present invention, which is intended to be limited solely by the appended claims.

## Claims

1. A radio-frequency (RF) controlled switch box without using Neutral wire, comprising:
a relay; and
an RF controlled circuit that receives an RF control signal to control open or closed state of the relay, the RF controlled circuit, the relay and a light-emitting diode (LED) light bulb being connected in series between Line wire and the Neutral wire;
wherein the RF controlled circuit includes a voltage clamper, and mains voltage between the Line wire and the Neutral wire is distributed between the voltage clamper and the LED light bulb when the relay is closed, such that the voltage clamper generates a clamped voltage and the LED light bulb turns on; the RF controlled circuit takes power from a rechargeable battery when the relay is open.

2. The RF controlled switch box of claim 1, further comprising:
an antenna that receives RF wave; and
an RF circuit that processes the RF wave to generate the RF control signal for the RF controlled circuit.

3. The RF controlled switch box of claim 1, further comprising a manual switch device that generates a manual switch signal for the RF controlled circuit to control open or closed state of the relay.

4. The RF controlled switch box of claim 1, wherein the voltage clamper comprises a first Zener diode and a second Zener diode, which are connected in series but in opposite directions.

5. The RF controlled switch box of claim 1, wherein the RF controlled circuit further comprises:
a rectifier that converts the alternating-current (AC) clamped voltage to a direct-current (DC) rectified voltage;
a charging circuit that receives the rectified voltage when the relay is closed, and then charges the rechargeable battery to generate a charging voltage; and
a microcontroller unit (MCU) that receives the RF control signal.

6. The RF controlled switch box of claim 5, wherein the charging circuit compares the rectified voltage and the charging voltage, larger one of which is selected as a power supply voltage.

7. The RF controlled switch box of claim 6, wherein the charging circuit selects the charging voltage as the power supply voltage when the relay is open; and the charging circuit selects a larger one of the rectified voltage and the charging voltage as the power supply voltage when the relay is closed.

8. The RF controlled switch box of claim 6, wherein the charging circuit comprises:
a first diode, forward connected between an input end and an output end of the charging circuit;
a second diode, forward connected between the input end of the charging circuit and a positive terminal of the rechargeable battery; and
a third diode, forward connected between the positive terminal of the rechargeable battery and the output end of the charging circuit.

9. The RF controlled switch box of claim 6, wherein the RF controlled circuit further comprises a voltage regulator, which receives the power supply voltage and then accordingly generates a regulated voltage as a power supply for the MCU.

10. A radio-frequency (RF) controlled circuit, comprising:
a voltage clamper that generates a clamped voltage;
a rectifier that converts the alternating-current (AC) clamped voltage to a direct-current (DC) rectified voltage;
a charging circuit that receives the rectified voltage when a voltage drop exists between two ends of the voltage clamper, and then charges a rechargeable battery to generate a charging voltage; and
a microcontroller unit (MCU) that receives an RF control signal.

11. The RF controlled circuit of claim 10, wherein the voltage clamper comprises a first Zener diode and a second Zener diode, which are connected in series but in opposite directions.

12. The RF controlled circuit of claim 10, wherein the charging circuit compares the rectified voltage and the charging voltage, larger one of which is selected as a power supply voltage.

13. The RF controlled circuit of claim 12, wherein the charging circuit selects the charging voltage as the power supply voltage when no voltage drop exists between the two ends of the voltage clamper; and the charging circuit selects a larger one of the rectified voltage and the charging voltage as the power supply voltage when a voltage drop exists between the two ends of the voltage clamper.

14. The RF controlled circuit of claim 12, wherein the charging circuit comprises:
a first diode, forward connected between an input end and an output end of the charging circuit;
a second diode, forward connected between the input end of the charging circuit and a positive terminal of the rechargeable battery; and
a third diode, forward connected between the positive terminal of the rechargeable battery and the output end of the charging circuit.

15. The RF controlled circuit of claim 12, further comprising a voltage regulator, which receives the power supply voltage and then accordingly generates a regulated voltage as a power supply for the MCU.
